# EUROPEAN PATENT SPECIFICATION

(11) **EP 3 471 504 B1**
(45) Date of publication and mention of the grant of the patent: **11.03.2020**
(21) Application number: 18382708.8
(22) Date of filing: 08.10.2018
(51) Int. Cl.: H04W 88/18, H04W 88/16, H04W 84/20, H04W 4/38

(54) **DEVICE FOR INTERCONNECTING SENSORS, SYSTEM FOR TRANSMITTING INFORMATION BETWEEN SENSORS AND METHOD FOR INTERCONNECTING SENSORS**
VORRICHTUNG ZUM VERBINDEN VON SENSOREN, SYSTEM ZUR INFORMATIONÜBERTRAGUNG ZWISCHEN SENSOREN UND VERFAHREN ZUM VERBINDEN VON SENSOREN
DISPOSITIF POUR INTERCONNECTER DES CAPTEURS, SYSTÈME DE TRANSMISSION D'INFORMATIONS ENTRE DES CAPTEURS ET PROCÉDÉ POUR INTERCONNECTER DES CAPTEURS

(30) Priority: 09.10.2017 ES 201731188
(43) Date of publication of application: 17.04.2019
(73) Proprietor: TT AMBIENTAL GESTIÓ I SERVICES, S.L., 08450 LLINARS DEL VALLES (ES)
(72) Inventor: Duran Nat, Jordi, 08450 LLINARS DEL VALLES (ES)
(74) Representative: Isern Patentes y Marcas S.L.

(56) References cited:
- WO-A2-01/35190
- US-A1- 2012 050 046

## Description

### TECHNICAL FIELD OF THE INVENTION

The present invention is related to the field of telecommunications systems, particularly devices capable of interconnecting sensors to gather the information coming from the same, process it and send it to nearby or remote devices that provide this information to final users for the subsequent processing thereof.

### STATE OF THE ART

Sensors are commonly used to determine specific physical, chemical or electrical values or similar in places of interest to carry out a series of actions based on the average value, for example to activate an alarm, conduct counts to generate statistics, etc. The sensors usually form part of a closed system, in other words, the sensors are directly and exclusively connected through the appropriate electrical and communication components to a processing device that decodes the information coming from said sensor so that the same may be interpreted and the obtained data is finally made available. Currently, and thanks to the advances in telecommunication technologies, the integration of sensors in intelligent systems has been carried out; however, said technologies do not envisage a device that enables the sensors to be interconnected bidirectionally and passively to a smartphone-type portable electronic device in order to take advantage of the flexibility and ability to receive and transmit information from said smartphone so that it can receive the information from the sensors, transmit said information to a database and modify the operating mode of the device that enables the bidirectional interconnection.

An example of connection between sensors and portable communication devices is the patent application US 2012/050046 which discloses systems and methods for monitoring at least one dynamic characteristic (DC) of a surface or surrounding environment. An RFID Tag and Sensor Module (RFID-TSM) is disposed on a surface. The RFID-TSM collects information relating to DC. A communication device (CD) is disposed within a communications range of DC. CD comprises an RFID reader and customizable software application. The RFID-TSM senses DC and communicates data relating to DC to CD. CD determines if a condition exits using the data and software application. In response to the existence of the condition, an operation is performed by CD using the software application. The operation can involve communicating the data and other information to at least one external device that is remote from CD. The condition, operation, information and external device can be defined by a consumer during a user-interactive session.

Another example is disclosed on international publication WO 01/35190 wherein a system for monitoring a variety of environmental and/or other conditions within a defined remotely located region is presented. In one embodiment, the system is configured to monitoring utility meters in a defined area. The system is implemented by using a plurality of wireless transmitters, wherein each wireless transmitter is integrated into a sensor adapted to monitor a particular data input. The system also includes a plurality of transceivers that are dispersed throughout the region at defined locations. The system uses a local gateway to translate and transfer information from the transmitters to a dedicated computer on a network. The dedicated computer, collects, compiles, and stores the data for retrieval upon client demand across the network. The computer further includes means for evaluating the received information and identifying an appropriate control signal, the system further including means for applying the control signal at a designated actuator.

According to the foregoing, it is obvious that there is a need to incorporate an interconnecting device capable of interconnecting at least one of a plurality of sensors that emit an analogue and/or digital signal based on a measurement and a portable electronic device, such as a smartphone, configured to receive and transmit a data sending unit, such as a digital stream, and emit signals with an identifier code that enables said portable electronic device to be identified individually and activate and/or deactivate components associated with the same, such as the sensors or the interconnecting device, so that the cloud, the data of the connected sensors, the measurements or records thereof and the devices involved in the connection can be sent to a database provided in remote storage through said portable electronic device, to obtain specific information about the location, the sensor and the interconnected portable electronic device.

### DESCRIPTION

The invention is defined by the appended claims.

To overcome the drawbacks found, the present invention provides a device for interconnecting at least one sensor and a portable electronic device, the sensor being configured to emit an analogue and/or digital signal based on a measurement and to be activated and/or deactivated remotely, and the portable electronic device configured to receive and transmit a digital stream and emit an activation and/or deactivation signal with an identifier code that identifies it individually, where the device for interconnecting comprises receiving means configured to receive the analogue and/or digital signals coming from the sensor; processing means configured to decode the signal coming from the sensors, process it and encode a digital stream comprising at least one identifier code of the device for interconnecting, a status code comprising the value of the measurement of at least one sensor; the device further comprising communication means configured to transmit the digital stream to the portable electronic device; activation and deactivation means configured to receive the activation and/or deactivation signal coming from the portable electronic device and activate and/or deactivate the sensor, the receiving means, the processing means and the communication means.

Moreover, the activation and deactivation means of the device for interconnecting are configured to detect the identifier code of the portable electronic device and wherein the digital stream further comprises the identifier code.

Alternatively, the device for interconnecting according to any of the preceding claims that further comprises temporary storage means configured to temporary store the identifier code of the device for interconnecting and the status code and wherein the activation and deactivation means are further configured to activate and/or deactivate the temporary storage means.

In alternative embodiments of the device for interconnecting, the communication means transmit the digital stream wirelessly, preferably by means of a wide broadcast transmission signal, following the Bluetooth protocol or similar.

The invention also provides a system for transmitting information which comprises at least one sensor configured to emit an analogue and/or digital signal based on a measurement and to be remotely activated; a device for interconnecting at least one sensor and the portable electronic device described in preceding paragraphs; a portable electronic device configured to receive the digital stream sent by the interconnecting device and to transmit it, as well as emit an activation and/or deactivation signal with an identifier code that identifies it individually and that is configured to activate and/or deactivate the receiving means, the processing means and the communication means of the device for interconnecting; a remote storage device configured to receive the digital stream and store it.

Alternatively, for the system for transmitting information, the device for interconnecting further comprises temporary storage means configured to temporarily store the identifier code of the device for interconnecting and the status code and wherein the activation and deactivation means are further configured to activate and/or deactivate the temporary storage means and wherein the activation and/or deactivation signal of the portable electronic device is configured to activate and/or deactivate the temporary storage means.

Preferably in the transmission system, the signal emitted by the sensors is analogue and/or digital, and the signal emitted by the communication means of the device for interconnecting sensors is a wide broadcast transmission signal, following the Bluetooth protocol or similar.

In alternative embodiments of the transmission system, the portable electronic device is a smartphone, tablet or similar, said portable electronic device being configured to transmit and receive a wide broadcast transmission signal, following the Bluetooth protocol or similar.

The invention further comprises a method of interconnecting at least one sensor and at least one remote storage device, starting from a device for interconnecting as defined above and a portable electronic device, where the sensor is configured to emit an analogue and/or digital signal based on a measurement and to be activated and/or deactivated remotely, the portable electronic device is configured to receive and transmit a digital stream and emit an activation and/or deactivation signal by means of a wide broadcast transmission signal, and the remote storage device is configured to receive the digital stream and store it, the method comprising the steps of:
- Sending of the activation signal by the portable electronic device;
- Receiving of the activation signal by the activation and deactivation means;
- Activating the sensor and obtaining the measurement values from the sensor;

- Sending the analogue and/or digital signal based on the measurement values to the device for interconnecting;
- Receiving of the measurement values by the receiving means of the device for interconnecting;
- Processing the measurement values of the sensor wherein a digital stream to be sent by the communication means of the device for interconnecting is established, which comprises the following sub-steps:
   - Assigning the identifier code of the device for interconnecting;
   - Assigning the status code;
- Transmitting the digital stream to the portable electronic device;
- Sending the digital stream from the portable electronic device to the remote storage device;
- Receiving and storing of the digital stream by and in the remote storage device;
- Sending of the deactivation signal by the portable electronic device;
- Receiving of the deactivation signal by the activation and deactivation means;
- Deactivating the sensor, the receiving means, the processing means and the communication means.

The method of interconnecting at least one sensor and at least one remote storage device, starting from the device for interconnecting wherein the activation and deactivation means are configured to receive and/or transmit the activation signal by means of a wide broadcast transmission signal and detect the identifier code of the portable electronic device and wherein the digital stream further comprises said identifier code, and a portable electronic device, where the sensor is configured to emit an analogue and/or digital signal based on a measurement and to be activated and/or deactivated remotely, the portable electronic device is configured to receive and transmit a digital stream and to emit an activation and/or deactivation signal with an identifier code by means of a wide broadcast transmission signal, and the remote storage device is configured to receive the digital stream and store it, the method being characterised in that it comprises the steps of:
- Sending of the activation signal with the identifier code by the portable electronic device;
- Receiving of the activation signal by the activation and deactivation means;
- Detecting of the identifier code by the activation and deactivation means;
- Activating the sensor and obtaining the measurement values from the sensor;
- Sending the analogue and/or digital signal based on the measurement values to the device for interconnecting;
- Receiving of the measurement values by the receiving means of the device for interconnecting;
- Processing the measurement values of the sensor wherein a digital stream to be sent by the communication means of the device for interconnecting is established, which comprises the following sub-steps:
   - Assigning the identifier code of the device for interconnecting;
   - Assigning the status code;
   - Assigning the identifier code of the portable electronic device;
- Transmitting the digital stream to the portable electronic device;
- Sending the digital stream from the portable electronic device to the remote storage device;
- Receiving and storing of the digital stream by and in the remote storage device;
- Sending of the deactivation signal with the identifier code by the portable electronic device;
- Receiving of the deactivation signal by the activation and deactivation means;
- Deactivating the sensor, the receiving means, the processing means and the communication means.

Alternatively, the method of interconnecting at least one sensor and at least one remote storage device, starting from the device for interconnecting described above wherein the activation and deactivation means are configured to detect the identifier code of the portable electronic device and wherein the digital stream further comprises said identifier code, the device for interconnecting further comprising temporary storage means configured to temporarily store the identifier code of the device for interconnecting and the status code and wherein the activation and deactivation means are further configured to activate and/or deactivate the temporary storage means, and where the communication means transmit the digital stream wirelessly by means of a wide broadcast transmission signal, preferably following the Bluetooth protocol or similar; and a portable electronic device, where the sensor is configured to emit an analogue and/or digital signal based on a measurement and to be activated and/or deactivated remotely, the portable electronic device is configured to receive and transmit a digital stream and to emit an activation and/or deactivation signal with an identifier code that identifies it individually and the remote storage device is configured to receive the digital stream and store it, the method being characterised in that it comprises the steps of:
- Sending of the activation signal with the identifier code by the portable electronic device;
- Receiving of the activation signal by the activation and deactivation means;
- Detecting the identifier code of the portable electronic device;
- Activating the sensor and obtaining the measurement values from the sensor;
- Sending the analogue and/or digital signal based on the measurement values to the device for interconnecting;
- Receiving the measurement values by the receiving means of the device for interconnecting;
- Processing the measurement values of the sensor wherein a digital stream to be sent by the communication means of the device for interconnecting is established, which comprises the following sub-steps:
   - Assigning the identifier code of the device for interconnecting;
   - Assigning the status code;
   - Assigning the identifier code of the portable electronic device;
- Storing the digital stream in the temporary storage means of the device for interconnecting;
- Transmitting the digital stream to the portable electronic device;
- Sending the digital stream from the portable electronic device to the remote storage device;
- Receiving and storing of the digital stream by and in the remote storage device;
- Sending of the deactivation signal with the identifier code by the portable electronic device;
- Receiving of the deactivation signal by the activation and deactivation means;
- Eliminating the digital stream stored in the temporary storage means and deactivating the sensor, the receiving means, the processing means and the communication means.

A second embodiment, which is not consider as a part of the subject-matter claimed, discloses a device for interconnecting at least one sensor and a portable electronic device, the sensor being configured to emit an analogue and/or digital signal based on time periodically measurement and the portable electronic device being configured to transmit a digital stream and emit an identifier code that identifies it individually and to transmit a status signal, where the device for interconnecting comprises receiving means configured to receive the analogue and/or digital signals coming from the sensor; means for detecting portable electronic devices near the device for interconnecting; decoding means configured to decode the signal coming from the sensors; remote storage means configured to store the decoded signal; digital comparing means configured to determine whether two decoded signals are the same; processing means configured to process and encode a digital stream comprising at least one identifier code of the device for interconnecting, a status code comprising the value of the decoded signal stored in the remote storage means, the identifier code of the portable electronic device detected by the detection means; communication means configured to transmit the digital stream to the portable electronic device and to receive the status signal of the portable electronic device; where at a first moment in time, the receiving means receive a first analogue and/or digital signal coming from the sensor, the decoding means decode it, the storage means store it and the processing means process and encode a first digital stream, and at a second moment in time, the receiving means receive a second analogue and/or digital signal coming from the sensor, the decoding means decode it and the digital comparing means determine whether the first decoded signal is the same as the second decoded signal, such that if they are not the same the remote storage means store the second decoded signal, eliminating the first decoded signal, and the processing means process and encode a second digital stream where the status code is the value of the second decoded signal.

Alternatively, in this second embodiment of the device for interconnecting, the digital stream further comprises a resend code of the digital stream that has at least two values, such that if the communication means do not receive the status signal coming from the portable electronic device, the resend code is activated.

Preferably, in the device for interconnecting of this second embodiment, the digital stream further comprises a code for detecting portable electronic devices with the number of electronic devices detected by the detection means.

Moreover, the communication means of the device for interconnecting transmit the digital stream wirelessly by means of a wide broadcast transmission signal, preferably following the Bluetooth protocol or similar.

The second embodiment also proposes a system for transmitting information comprising at least one sensor configured to emit an analogue and/or digital signal based on time periodically measurement; a device for interconnecting at least one sensor and a portable electronic device according to said second embodiment; a portable electronic device configured to receive the digital stream sent by the interconnecting device and transmit said digital stream and a status signal when it has transmitted the digital stream; a remote storage device configured to receive the digital stream and store it.

Preferably, the signal emitted by the sensors is analogue and/or digital, and the signal emitted by the communication means of the device for interconnecting sensors is a wide broadcast transmission signal, following the Bluetooth protocol or similar.

Moreover, the portable electronic device that forms part of the transmission system is a smartphone, tablet or similar, said portable electronic device being configured to transmit and receive a wide broadcast transmission signal, following the Bluetooth protocol or similar.

The second embodiment also provides a method of interconnecting sensors and remote storage devices, starting from a device for interconnecting according to the second embodiment and a portable electronic device, where at least the sensor is configured to emit an analogue and/or digital signal based on time periodically measurement, the portable electronic device is configured to transmit a digital stream and emit an identifier code that identifies it individually and to transmit a status signal by means of a wide broadcast transmission signal, and the remote storage device is configured to receive the digital stream and store it, the method comprising the steps of:
- Obtaining measurement values from the sensor;
- Sending the analogue and/or digital signal based on the measurement values to the device for interconnecting;
- Receiving the measurement values by the receiving means of the device for interconnecting;
- Processing the measurement values of the sensor wherein a digital stream to be sent by the device for interconnecting is established, which comprises the following sub-steps:
   - Assigning the identifier code of the device for interconnecting;
   - Assigning the status code;
   - Assigning the identifier code of the portable electronic device;
- Transmitting the digital stream to the portable electronic device by means of a wide broadcast transmission signal;
- Sending the digital stream from the portable electronic device to the remote storage device;
- Sending of the status signal by the portable electronic device;
- Receiving and storing of the digital stream by and in the remote storage device;
- Receiving of the status signal by the communication means of the device for interconnecting;

Alternatively, the method of interconnecting sensors and remote storage devices, starting from the device for interconnecting of the second embodiment and a portable electronic device, where at least the sensor is configured to emit an analogue and/or digital signal based on time periodically measurement, the portable electronic device is configured to transmit a digital stream and emit an identifier code that identifies it individually and to transmit a status signal, and the remote storage device is configured to receive the digital stream and store it, the method being characterised in that it comprises the steps of:
- Obtaining measurement values from the sensor.
- Sending the analogue and/or digital signal based on the measurement values to the device for interconnecting;
- Receiving of the measurement values by the receiving means of the device for interconnecting;
- Processing the detection values of the sensor wherein a digital stream to be sent by the device for interconnecting is established, which comprises the following sub-steps:
   - Assigning the identifier code of the device for interconnecting;
   - Assigning the status code;
   - Assigning the identifier code of the portable electronic device;
- Transmitting the digital stream to the portable electronic device;
- Sending the digital stream from the portable electronic device to the remote storage device;
- In the case that:
   - the portable electronic device sends the status signal;
      - Receiving and storing of the digital stream by and in the remote storage device;
      - Receiving of the status signal by the communication means of the device for interconnecting;
   - the portable electronic device does not send the status signal;
      - Activating the resend code and adding said resend code to the digital stream.

The main advantage of the invention is the ability to establish bidirectional communication between the interconnected sensors and the portable electronic devices by means of the interconnecting device; in other words, the interconnecting device can receive and send data signals to and from the portable electronic device, and to and from the sensors, being able to obtain data and modify the performance of the attached devices by means of interconnection.

### BRIEF DESCRIPTION OF THE FIGURES

The previous advantages and features, in addition to others, shall be understood more fully in light of the following detailed description of exemplary embodiments, with reference to the drawings attached, which must be taken by way of illustration and not limitation, wherein:
- Fig. 1 is a view of a first embodiment of the interconnecting device, wherein the main components thereof and the elements with which it is interconnected are shown.
- Fig. 2 is a view of a second embodiment of the interconnecting device, wherein the main components thereof and the elements with which it is interconnected are shown.
- Fig. 3 is a view of an application of the interconnecting device in an urban waste container.

### DETAILED DESCRIPTION OF AN EXEMPLARY EMBODIMENT

The following detailed description presents a number of specific details by way of example to provide a detailed understanding of the relevant teachings. However, it is clear for a person skilled in the art that the present teachings can be carried out without these details.

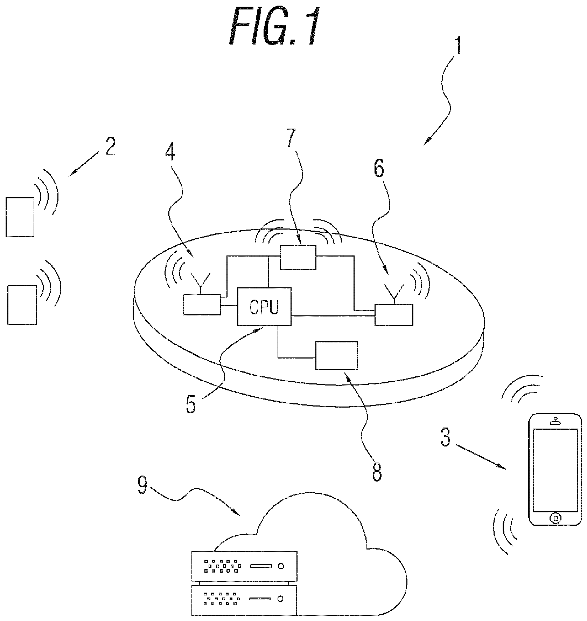

According to that observed in Figure 1, in a first embodiment, the present invention provides a device for interconnecting (1) at least one sensor (2) and a portable electronic device (3), the sensor (2) being configured to emit an analogue and/or digital signal based on a measurement and to be activated and/or deactivated remotely, and the portable electronic device (3) configured to receive and transmit a digital stream and emit an activation and/or deactivation signal with an identifier code that identifies it individually, where the device for interconnecting (1) comprises receiving means (4) configured to receive the analogue and/or digital signals coming from the sensor (2); processing means (5) configured to decode the signal coming from the sensor (2), process it and encode a digital stream comprising at least one identifier code of the device for interconnecting (1), and a status code comprising the value of the measurement of at least one sensor (2); communication means (6) configured to transmit the digital stream to the portable electronic device (3); activation and deactivation means (7) configured to receive the activation and/or deactivation signal coming from the portable electronic device (3) and activate and/or deactivate the sensor (2), the receiving means (4), the processing means (5) and the communication means (6).

In this first embodiment, the device for interconnecting (1) is configured to remain in stand-by mode, saving energy as it waits to receive the activation signal from an external device, such as a portable electronic device (3); in this way, only the activation and deactivation means (7) are powered while the remaining components are inactive. Once the activation and deactivation means (7) receive the activation signal, they activate the remaining components to start operating the interconnecting device (1).

In preferred embodiments, the device for interconnecting (1) is electrically powered by means of a battery, such that the stand-by mode helps reduce energy use and therefore extends the charge and life of said battery. In alternative embodiments, the device for interconnecting (1) can be powered through photovoltaic energy or via connection to the power supply grid.

To obtain the measuring signals of different points of interest, the device for interconnecting (1) at least one sensor (2) and a portable electronic device (3) of the present invention is capable of interconnecting, in other words, simultaneously receiving the information coming from sensors, such as fill-level sensors, presence sensors, tilt sensors, temperature sensors, moisture sensors, presence sensors and similar. It is generally known that a sensor is an object capable of detecting physical or chemical values, called instrumentation variables, and transforming them into electrical variables, said sensors being able to send an analogue or digital signal, depending on the particular configuration of each of them.

Likewise, and to be able to receive signals coming from the sensors described, the device has receiving means (4) which preferably consist of antennas configured to receive the data from at least one sensor (2) that interconnects to the device. Similarly, the communication means (6) responsible for transmitting the digital stream of the interconnecting device (1) preferably consist of antennas, as is known in the technical field of telecommunications. It is important to note in this aspect that the communication means (6) are prepared to receive and transmit wide broadcast transmission signals that, as is known by a person skilled in the art, consist of an emitting node that simultaneously sends information to a multitude of receiving nodes, without needing to reproduce the same transmission node by node. Accordingly, the communication means (6) are configured to transmit the digital stream wirelessly by means of a wide broadcast transmission signal, following the Bluetooth protocol or similar. This type of transmission, also known as broadcast, is advantageous, since the stream is sent "to the air" so that a portable electronic device (3) that is available collects it and transmits it.

Like the communication means (6) of the interconnecting device (1), the portable electronic device (3) is configured to receive and transmit wide broadcast transmission signals, following the Bluetooth protocol or similar. Thus, and according to the first embodiment, the portable electronic device sends signals according to a predetermined time frequency within a determined range of lengths until the activation and deactivation means (7) of the interconnecting device (1) detect said signal transmitted by means of wide broadcast activating the sensors and the other components of the interconnecting device. In alternative embodiments, the portable electronic device preferably consists of a smartphone, a tablet and/or similar, in addition to devices that are capable of at least emitting an activation signal of the wide broadcast type, such as an electronic key.

As stated above, the interconnecting device (1) claimed, given the signals of the data coming from the at least one sensor (2) interconnected to the same, is capable of decoding said signals coming from the sensor (2), processing them and encoding a digital stream. The processing means (5) preferably comprise a microcontroller, a microprocessor and/or similar, which are widely known in the field of electronics, which by means of an algorithm integrated therein, process the data received and encode them to establish a digital stream. The processing means (5) preferably comprise analogue/digital converters in cases where the signal coming from the sensors is analogue.

Furthermore, it is also known that a digital stream is a successive series of bits, organised cyclically, which transport information and enable this information to be extracted when received. Given the foregoing, in the embodiment of the present invention, the aforementioned digital stream comprises information of at least one identifier code of the portable electronic device (3), an identifier code of at least one sensor (2) and a status code comprising the value of the measurement of said at least one sensor (2). Alternatively, the digital stream can further comprise a resend code of the digital stream that has at least two values that determine whether the portable electronic device (3) should resend the digital stream.

As stated above, the portable electronic device (3) is configured to receive and transmit the digital stream and emit an activation and/or deactivation signal with an identifier code that identifies it individually by means of a wide broadcast transmission signal. Moreover, the portable electronic device (3) is configured to send a status signal to identify whether the digital stream has or has not been transmitted. When, for reasons described below, the portable electronic device (3) cannot transmit the digital stream, the latter will be stored so that the value of the measurement taken by the sensor (2) is not lost. To this end, the interconnecting device (1) comprises remote storage means (8) configured to temporary store the identifier code of the device for interconnecting (1) and the status code and wherein the activation and deactivation means (7) are further configured to activate and/or deactivate the temporary storage means (8). The temporary storage means (8) preferably comprise storage memories widely known in the field of electronics, such as a data buffer and/or similar.

Preferably, the first embodiment of the device for interconnecting (1) of the present invention is incorporated into a system for transmitting information comprising at least one sensor (2) configured to emit an analogue and/or digital signal based on a measurement and to be remotely activated; a device for interconnecting (1) at least one sensor (2) and the portable electronic device (3), said device for interconnecting (1) being configured according to the first embodiment described in preceding paragraphs; a portable electronic device (3) configured to receive the digital stream sent by the device for interconnecting (1) and to transmit it, as well as to emit an activation and/or deactivation signal with an identifier code that identifies it individually and said signal being configured to activate and/or deactivate the receiving means (4), the processing means (5) and the communication means (6) of the device for interconnecting (1); a remote storage device (9) configured to receive the digital stream and store it.

The purpose of incorporating the device for interconnecting (1) in a system for transmitting information is to be able to transmit to a remote storage (9), such as a database in the cloud, the measurement status of at least one sensor (2) arranged in a particular location and to measure a value of interest, using a portable electronic device (3) as a bridge of communication.

In the preceding lines it has been mentioned that the device for interconnecting (1) comprises temporary storage means (9) configured to temporarily store the identifier code of the device for interconnecting and the status code of the measurement of the sensor. In the system for transmitting information, the temporary storage (8) is advantageous given that sometimes the portable electronic device (3) is not able to or cannot transmit the digital stream to the remote storage (9). In these cases, the identifier code of the device for interconnecting (1) and the status code of the measurement of the sensor (2) are stored so that they can be resent by another portable electronic device (8) that is able to transmit the stored digital stream.

The first embodiment of the invention further comprises a method of interconnecting at least one sensor (2) and at least one remote storage device (9), starting from a device for interconnecting (1), said device for interconnecting (1) being configured according to the first embodiment described in preceding paragraphs, and a portable electronic device (3), where the sensor (2) is configured to emit an analogue and/or digital signal based on a measurement and to be activated and/or deactivated remotely, the portable electronic device (3) is configured to receive and transmit a digital stream and emit an activation and/or deactivation signal and the remote storage device (81) is configured to receive the digital stream and store it, the method comprising the steps of:
- Sending of the activation signal by the portable electronic device (3);
- Receiving of the activation signal by the activation and deactivation means (7);
- Activating the sensor (2) and obtaining the measurement values from the sensor (2);
- Sending the analogue and/or digital signal based on the measurement values to the device for interconnecting (1);
- Receiving of the measurement values by the receiving means of the device for interconnecting (1);
- Processing the measurement values of the sensor (2) wherein a digital stream to be sent by the communication means (6) of the device for interconnecting (1) is established, which comprises the following sub-steps:
   - Assigning the identifier code of the device for interconnecting;
   - Assigning the status code;
- Transmitting the digital stream to the portable electronic device (3);
- Sending the digital stream from the portable electronic device (3) to the remote storage device (9);
- Receiving and storing of the digital stream by and in the remote storage device (9);
- Sending of the deactivation signal by the portable electronic device (3);
- Receiving of the deactivation signal by the activation and deactivation means (7);
- Deactivating the sensor (2), the receiving means (4), the processing means (5) and the communication means (6).

It is important to note in the preceding method that, as mentioned previously, the device for interconnecting is normally in stand-by mode to save energy; therefore, it requires the intervention of a portable electronic device (3) that functions as an activator of the sensor (2) and of the device for interconnecting (1) in order to execute the steps of the method, and it deactivates them when said method has concluded.

Moreover, and additionally, when the digital stream has been established by the device for interconnecting (1), the same is stored in a temporary storage (8) before being transmitted to the portable electronic device (3). Along the same lines, when the portable electronic device (3) has received the digital stream, in return, it sends a signal to the device for interconnecting (1) that contains information on whether said portable electronic device (3) has or has not transmitted the digital stream. In the case that the signal indicates that the stream has not been transmitted by the portable electronic device (3), said stream remains in the temporary storage device (8) until another portable electronic device approaches and is able to transmit the stored digital stream. In this aspect it is worth noting that, as stated above, the communications means (6) transmit the digital stream by means of a wide broadcast transmission signal; therefore, when the device for interconnecting (1) detects that the digital stream has not been resent, it can proceed in two ways:
- the communication means (6) emit a periodic signal comprising the digital stream that is to be sent, until another portable electronic device (3) receives it and transmits it to the remote storage means (9);
- the communication means (6) are turned off, since the digital stream is stored in the temporary storage means (8), awaiting to be activated by the activation means (7), when the latter receive the activation and/or deactivation signal from another portable electronic device (3). The stored digital stream is sent to the portable electronic device (3) so that the latter in turn transmits it to the remote storage means (9), before proceeding with a new digital stream product of the new measurement by the sensor (2).

Once the stored digital stream has been transmitted, it is erased and/or replaced with a new digital stream corresponding to the information obtained upon repeating the method of interconnecting.

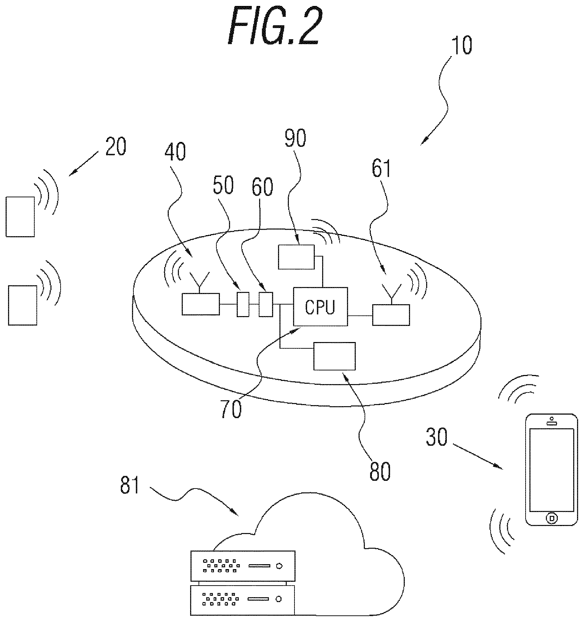

As shown in Figure 2, the second embodiment of the invention, which is not taking part of the claimed matter, proposes a device for interconnecting (10) at least one sensor (20) and a portable electronic device (30), the sensor (20) being configured to emit an analogue and/or digital signal based on time periodically measurement and the portable electronic device (30) being configured to transmit a digital stream and emit an identifier code that identifies it individually and to transmit a status signal, where the device for interconnecting (10) comprises receiving means (40) configured to receive the analogue and/or digital signals coming from the sensor (20); means for detecting (90) portable electronic devices (30) near the device for interconnecting (10); decoding means (50) configured to decode the signal coming from the sensors (20); temporary storage means (80) configured to store the decoded signal; digital comparing means (60) configured to determine whether two decoded signals are the same; processing means (70) configured to process and encode a digital stream comprising at least one identifier code of the device for interconnecting (10), a status code comprising the value of the decoded signal stored in the remote storage means (80), the identifier code of the portable electronic device (30) detected by the detection means (90); communication means (61) configured to transmit the digital stream to the portable electronic device (30) and to receive the status signal of the portable electronic device (30); where at a first moment in time, the receiving means (40) receive a first analogue and/or digital signal coming from the sensor (20), the decoding means (50) decode it, the temporary storage means (80) store it and the processing means (70) process and encode a first digital stream, and at a second moment in time, the receiving means (40) receive a second analogue and/or digital signal coming from the sensor (20), the decoding means (50) decode it and the digital comparing means (60) determine whether the first decoded signal is identical to the second decoded signal, such that if they are not identical, the temporary storage means (80) store the second decoded signal, eliminating the first decoded signal, and the processing means (70) process and encode a second digital stream where the status code is the value of the second decoded signal.

Unlike the first embodiment, in the device for interconnecting (10) of the second embodiment the components are active at all times, such that an activation signal by the portable electronic device (30) is not required. In this second embodiment, the device for interconnecting (10) is configured to send and/or receive signals by means of a wide broadcast transmission signal, following the Bluetooth protocol or similar; therefore, it periodically sends and receives signals, transmitting them continuously to the portable electronic devices. Moreover, in said second embodiment, it can be observed that a comparison criterion has been established to compare two different measurements of the sensor, which are taken at different times, with the aim of determining whether there were changes in the magnitude or measurement of the sensor and to be able to record said changes.

It is important to note that both the device for interconnecting (1) of the first embodiment and the device for interconnecting (10) of the second embodiment comprise decoding means configured to decode the signal coming from the sensors (20) so that the same can be interpreted by the processing unit (5) (50).

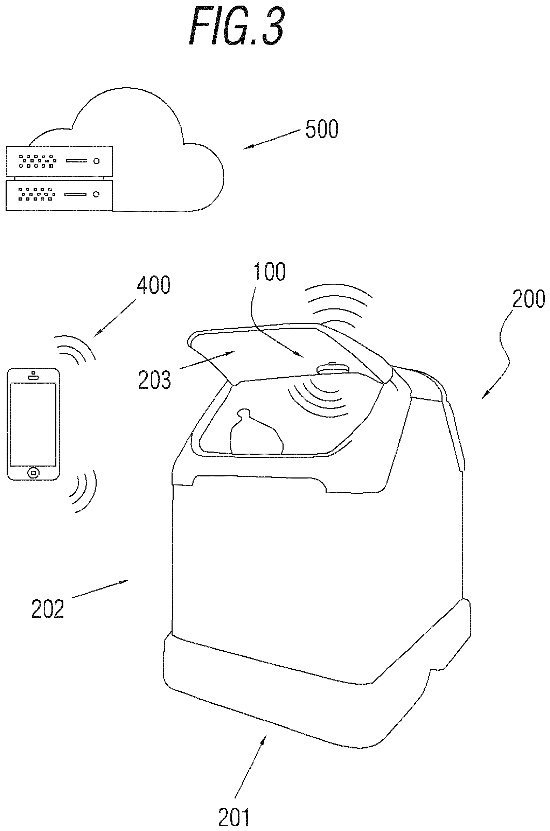

As observed in Figure 3, a particular application of the device for interconnecting (100) of the present invention is provided as a method for the sensorisation, qualification and quantification of the waste in urban waste containers (200) comprising at least one sensor (300) configured to detect whether an object has been inserted in said container (200), to measure the volume of waste in the container (200) and to emit an analogue and/or digital signal based on said detection, a device for interconnecting sensors (100) according to the previous description thereof and which further comprises detection means (110) configured to detect the close presence of a portable electronic device (300) that in turn is configured to receive the digital stream sent by the interconnecting device (100), and a remote storage device (500) configured to receive the digital stream and/or store it and/or transmit it, where the method comprises the steps of:
a. Detecting the presence of a portable electronic device (400) close to said device for interconnecting (100) through the detection means (110) of the device for interconnecting sensors (100);
b. Detecting whether an object has been inserted into the container (200) through the sensor (300);
c. Detecting a volume of waste in the container (200) through the sensor (300);
d. Sending the analogue and/or digital signal based on the detection of whether an object has been inserted and/or the volume of waste to the device for interconnecting sensors (100);
e. Receiving of detection values by the device for interconnecting sensors (100);
f. Processing the detection values of the sensor (300) wherein a digital stream to be sent by the device for interconnecting (1) is established, which comprises the following sub-steps:
   - Assigning the identifier code of the device for interconnecting (100);
   - Assigning the status code if an object has been inserted and/or of the volume of waste in the container (200);
g. Transmitting the digital stream to the portable electronic device (400);
h. In the case that the resend code of the digital stream is assigned the corresponding value to resend the digital stream:
   - Sending the digital stream from the portable electronic device (400) to the remote storage device (500);
   - Storing and organising the information contained in the digital stream in the remote storage device (500).

According to this application, and as observed in Figure 3, the urban waste containers (200) comprise a body made up of a base wall (201) and side walls (202) that are transversely extruded from the base wall (201) and that end in an open end that is closed by means of a cover (203), preferably by the action of an actuator (204) (not shown) that operationally connects said body and said cover (203), the sensor (300) being attached to the actuator (204) in such a way that it transmits an actuation signal to said actuator (204). Therefore, when the container includes the actuator (204), it is necessary to include an additional step in the method that includes sending an actuation signal to said actuator (204) to operate the cover (203) to open it and subsequently introduce the waste.

It is also worth noting that in this particular application, at least one sensor (300) can be integrated into the device for interconnecting (100). Furthermore, and according to the particular application of the waste container (200), the device for interconnecting (100) can be configured according to the first embodiment or the second embodiment.

## Claims

1. A device for interconnecting (1) at least one sensor (2) and a portable electronic device (3), the sensor (2) being configured to emit an analogue and/or digital signal based on a measurement and to be activated and/or deactivated remotely, and the portable electronic device (3) being configured to receive and transmit a digital stream sent by the interconnecting device (1) and to emit an activation and/or deactivation signal with an identifier code that identifies it individually, the device for interconnecting (1) comprises:
- Receiving means (4) configured to receive the analogue and/or digital signals coming from the sensor (2);
- Processing means (5) configured to decode the signal coming from the sensor, process it and encode it to a digital stream comprising at least:
- one identifier code of the device for interconnecting (1);
- one status code comprising the value of the measurement of at least one sensor (2);
- communication means (6) configured to transmit the digital stream to the portable electronic device (3);
- activation and deactivation means (7) configured to receive the activation and/or deactivation signal with an identifier code of the portable device (3) coming from the portable electronic device (3) and activate and/or deactivate the sensor (2), the receiving means (4), the processing means (5) and the communication means (6); and
- temporary storage means (8) configured to temporarily store the identifier code of the device for interconnecting (1) and the status code and wherein the activation and deactivation means (7) are further configured to activate and/or deactivate the temporary storage means (8).

2. The device for interconnecting (1) according to the preceding claim, wherein the activation and deactivation means (7) are configured to detect the identifier code of the portable electronic device (3) and wherein the digital stream further comprises said identifier code.

3. The device for interconnecting (1) according to any of the preceding claims, wherein the communication means (6) is configured to transmit the digital stream wirelessly by means of a wide broadcast transmission signal, and wherein the activation and/or deactivation means (7) are configured to receive a wide broadcast transmission signal, following the Bluetooth protocol.

4. A system for transmitting information, comprising at least:
- a sensor (2) configured to emit an analogue and/or digital signal based on a measurement and to be activated remotely;
- a device for interconnecting (1) at least one sensor and a portable electronic device (3) according to claims 1 to 3;
- a portable electronic device (3) configured to receive the digital stream sent by the device for interconnecting (1) and transmit it to a remote storage device (9), as well as emit an activation and/or deactivation signal with an identifier code that identifies it individually and that is configured to activate and/or deactivate the receiving means (4), the processing means (5) and the communication means (6) of the device for interconnecting (1), and/or deactivate the temporary storage means (8); and
- a remote storage device (9) configured to receive the digital stream and store it.

5. The system for transmitting information according to claim 4, wherein the signal emitted by the communication means (6) is a wide broadcast transmission signal, following the Bluetooth protocol or similar, and the portable electronic device (3) is a smartphone or a tablet.

6. A method for transmitting information in the system of claim 4 comprising at least one sensor (2) and at least one remote storage device (9), wherein the system comprises a device for interconnecting (1) according to any of claims 1 to 3 and a portable electronic device (3) where the sensor (2) is configured to emit an analogue and/or digital signal based on a measurement and to be activated and/or deactivated remotely, the portable electronic device (3) is configured to receive and transmit a digital stream and emit an activation and/or deactivation signal with an identifier code of the portable device (3), and the remote storage device (9) is configured to receive the digital stream and store it, the method comprises the steps of:
- Sending of the activation signal by the portable electronic device (3) to the device for interconnecting (1);
- Receiving of the activation signal by the activation and deactivation means (7) of the device for interconnecting (1);
- Activating by the activation and deactivation means (7) of the device for interconnecting (1) the sensor (2) and the receiving means (4), the processing means (5), the communication means (6) and the temporary storage means (8) of the device for inteconnecting (1) and obtaining the measurement values from the sensor (2);
- Sending by the sensor (2) the analogue and/or digital signal based on the measurement values to the device for interconnecting (1);
- Receiving of the measurement values by the receiving means (4) of the device for interconnecting (1);
- Processing the measurement values of the sensor (2) wherein a digital stream to be sent by the communication means (6) of the device for interconnecting (1) is established, which comprises the following sub-steps:
- Assigning to the digital stream an identifier code of the device for interconnecting;
- Assigning to the digital stream a status code comprising the value of the measurement of at least one sensor;
- Transmitting the digital stream to the portable electronic device (3);
- Sending the digital stream from the portable electronic device (3) to the remote storage device (9);
- Receiving and storing of the digital stream respectively by and in the remote storage device (9);
- Sending of the deactivation signal by the portable electronic device (3) to the interconnecting device (1);
- Receiving of the deactivation signal by the activation and deactivation means (7) of the device for interconnecting(1); and
- Deactivating the sensor (2), the receiving means (4), the processing means (5), the communication means (6) and the temporary storage means (8) of the device for inteconnecting (1).

7. The method of the previous claim, wherein the method further comprises the steps of:
- Sending of the activation signal with the identifier code by the portable electronic device (3);
- Detecting of the identifier code by the activation and deactivation means (7), after the step of receiving of the activation signal by the activation and deactivation means (7);
- Assigning the identifier code of the portable electronic device (3), after the sub-step of assigning the status code at the step of processing the measurement values of the sensor (2) wherein a digital stream to be sent by the communication means (6) of the device for interconnecting (1) is established; and
- Sending of the deactivation signal with the identifier code by the portable electronic device (3), after the step of receiving and storing of the digital stream by and in the remote storage device (9).

8. The method according to claim 7, wherein the method further comprises the steps of:
- Storing the digital stream in the temporary storage means (8) of the device for interconnecting (1), after the step of processing the measurement values of the sensor (2) wherein a digital stream to be sent by the communication means (6) of the device for interconnecting (1) is established; and
- Eliminating the digital stream stored in the temporary storage means (8), after the step of receiving of the deactivation signal by the activation and deactivation means (7).

## Patentansprüche

1. Verbindungsvorrichtung (1) mindestens eines Sensors (2) und einer tragbaren elektronischen Vorrichtung (3), wobei der Sensor (2) konfiguriert ist, ein analoges und/oder digitales Signal basierend auf einer Messung zu emittieren und per Fernzugriff aktiviert und/oder deaktiviert zu werden, und die tragbare elektronische Vorrichtung (3) konfiguriert ist, einen digitalen Strom, der von der Verbindungsvorrichtung (1) gesendet wird, zu empfangen und zu übertragen und ein Aktivierungs- und/oder Deaktivierungssignal mit einem Identifikationscode zu emittieren, welcher sie individuell identifiziert, wobei die Verbindungsvorrichtung (1) Folgendes umfasst:
- eine Empfangseinrichtung (4), die konfiguriert ist, die von dem Sensor (2) kommenden, analogen und/oder digitalen Signale, zu empfangen;
- eine Verarbeitungseinrichtung (5), die konfiguriert ist, das von dem Sensor kommende Signal zu dekodieren, es zu verarbeiten und es für einen digitalen Strom zu codieren, umfassend mindestens:
- einen Identifikationscode der Verbindungsvorrichtung (1);
- einen Statuscode, umfassend den Wert der Messung mindestens eines Sensors (2);
- eine Kommunikationseinrichtung (6), die konfiguriert ist, den digitalen Strom an die tragbare elektronische Vorrichtung (3) zu übertragen;
- eine Aktivierungs- und Deaktivierungseinrichtung (7), die konfiguriert ist, das Aktivierungs- und/oder Deaktivierungssignal mit einem Identifikationscode der tragbaren Vorrichtung (3) zu empfangen, das von der tragbaren elektronischen Vorrichtung (3) kommt, und den Sensor (2), die Empfangseinrichtung (4), die Verarbeitungseinrichtung (5) und die Kommunikationseinrichtung (6) zu aktivieren und/oder zu deaktivieren, und
- eine temporäre Speichereinrichtung (8), die konfiguriert ist, den Identifikationscode der Verbindungsvorrichtung (1) und den Statuscode temporär zu speichern, und wobei die Aktivierungs- und Deaktivierungseinrichtung (7) ferner konfiguriert sind, die temporäre Speichereinrichtung (8) zu aktivieren und/oder deaktivieren.

2. Verbindungsvorrichtung (1) nach dem vorhergehenden Anspruch, wobei die Aktivierungs- und Deaktivierungseinrichtung (7) konfiguriert ist, den Identifikationscode der tragbaren elektronischen Vorrichtung (3) zu erfassen, und wobei der digitale Strom ferner den Identifikationscode umfasst.

3. Verbindungsvorrichtung (1) nach einem der vorhergehenden Ansprüche, wobei die Kommunikationseinrichtung (6) konfiguriert ist, den digitalen Strom drahtlos mittels eines breiten Funkübertragungssignals zu übertragen, und wobei die Aktivierungs- und/oder Deaktivierungseinrichtung (7) konfiguriert ist, ein breites Funkübertragungssignal zu empfangen, das dem Bluetooth-Protokoll folgt.

4. System zum Übertragen von Informationen, umfassend mindestens:
- einen Sensor (2), der dazu konfiguriert ist, ein analoges und/oder digitales Signal basierend auf einer Messung zu emittieren und per Fernzugriff aktiviert zu werden;
- eine Verbindungsvorrichtung (1) zum Verbinden mindestens eines Sensors und einer tragbaren elektronischen Vorrichtung (3) nach Anspruch 1 bis 3;
- eine tragbare elektronische Vorrichtung (3), die konfiguriert ist, den von der Verbindungsvorrichtung (1) gesendeten digitalen Strom zu empfangen und ihn an eine entfernte Speichervorrichtung (9) zu übertragen sowie ein Aktivierungs- und/oder Deaktivierungssignal mit einem Identifikationscode, der sie individuell identifiziert, zu emittieren, und die konfiguriert ist, die Empfangseinrichtung (4), die Verarbeitungseinrichtung (5) und die Kommunikationseinrichtung (6) der Verbindungsvorrichtung (1) zu aktivieren und/oder zu deaktivieren und/oder die temporäre Speichereinrichtung (8) zu deaktivieren; und
- eine entfernte Speichereinrichtung (9), die konfiguriert ist, den digitalen Strom zu empfangen und ihn zu speichern.

5. System zum Übertragen von Informationen nach Anspruch 4, wobei das von der Kommunikationseinrichtung (6) emittierte Signal ein breites Funkübertragungssignal ist, das dem Bluetooth-Protokoll oder Ähnlichem folgt, und wobei die tragbare elektronische Vorrichtung (3) ein Smartphone oder ein Tablet ist.

6. Verfahren zum Übertragen von Informationen in dem System nach Anspruch 4, umfassend mindestens einen Sensor (2) und mindestens eine entfernte Speichervorrichtung (9), wobei das System eine Verbindungsvorrichtung (1) nach einem der Ansprüche 1 bis 3 und eine tragbare elektronische Vorrichtung (3) umfasst, wobei der Sensor (2) konfiguriert ist, ein analoges und/oder digitales Signal basierend auf einer Messung zu emittieren und per Fernzugriff aktiviert und/oder deaktiviert zu werden, wobei die tragbare elektronische Vorrichtung (3) konfiguriert ist, einen digitalen Strom zu empfangen und zu übertragen und ein Aktivierungs- und/oder Deaktivierungssignal mit einem Identifikationscode der tragbaren Vorrichtung (3) zu emittieren, und die entfernte Speichervorrichtung (9) konfiguriert ist, den digitalen Strom zu empfangen und ihn zu speichern, wobei das Verfahren die folgenden Schritte umfasst:
- Senden des Aktivierungssignals durch die tragbare elektronische Vorrichtung (3) an die Verbindungsvorrichtung (1);
- Empfangen des Aktivierungssignals durch die Aktivierungs- und Deaktivierungseinrichtung (7) der Verbindungsvorrichtung (1);
- Aktivieren des Sensors (2) und der Empfangseinrichtung (4), der Verarbeitungseinrichtung (5), der Kommunikationseinrichtung (6) und der temporären Speichereinrichtung (8) der Verbindungsvorrichtung (1) durch die Aktivierungs- und Deaktivierungseinrichtung (7) der Verbindungsvorrichtung (1) und Erhalten der Messwerte von dem Sensor (2);
- Senden des auf den Messwerten basierenden analogen und/oder digitalen Signals durch den Sensor (2) an die Verbindungsvorrichtung (1);
- Empfangen der Messwerte durch die Empfangseinrichtung (4) der Verbindungsvorrichtung (1);
- Verarbeiten der Messwerte des Sensors (2), wobei ein digitaler Strom, der von der Kommunikationseinrichtung (6) der Verbindungsvorrichtung (1) gesendet werden soll, hergestellt wird, was die folgenden Teilschritte umfasst:
- Zuordnen eines Identifikationscodes der Verbindungsvorrichtung zu dem digitalen Strom;
- Zuordnen eines Statuscodes zu dem digitalen Strom, der den Messwert mindestens eines Sensors umfasst;
- Übertragen des digitalen Stroms an die tragbare elektronische Vorrichtung (3);
- Senden des digitalen Stroms von der tragbaren elektronischen Vorrichtung (3) an die entfernte Speichervorrichtung (9);
- Empfangen und Speichern des digitalen Stroms durch die bzw. in der entfernten Speichereinrichtung (9);
- Senden des Deaktivierungssignals durch die tragbare elektronische Vorrichtung (3) an die Verbindungsvorrichtung (1);
- Empfangen des Deaktivierungssignals durch die Aktivierungs- und Deaktivierungseinrichtung (7) der Verbindungsvorrichtung (1); und
- Deaktivieren des Sensors (2), der Empfangseinrichtung (4), der Verarbeitungseinrichtung (5), der Kommunikationseinrichtung (6) und der temporären Speichereinrichtung (8) der Verbindungsvorrichtung (1).

7. Verfahren nach einem der vorhergehenden Ansprüche,
wobei das Verfahren ferner die folgenden Schritte umfasst:
- Senden des Aktivierungssignals mit dem Identifikationscode durch die tragbare elektronische Vorrichtung (3);
- Erfassen des Identifikationscodes durch die Aktivierungs- und Deaktivierungseinrichtung (7) nach dem Schritt des Empfangens des Aktivierungssignals durch die Aktivierungs- und Deaktivierungseinrichtung (7);
- Zuordnen des Identifikationscodes der tragbaren elektronischen Vorrichtung (3) nach dem Unterschritt des Zuordnens des Statuscodes in dem Schritt des Verarbeitens der Messwerte des Sensors (2), wobei ein digitaler Strom, der von der Kommunikationseinrichtung (6) der Verbindungsvorrichtung (1) gesendet werden soll, hergestellt wird; und
- Senden des Deaktivierungssignals mit dem Identifikationscode durch die tragbare elektronische Vorrichtung (3) nach dem Schritt des Empfangens und Speicherns des digitalen Stroms durch die und in der entfernten Speichervorrichtung (9).

8. Verfahren nach Anspruch 7, wobei das Verfahren ferner die folgenden Schritte umfasst:
- Speichern des digitalen Stroms in der temporären Speichereinrichtung (8) der Verbindungsvorrichtung (1) nach dem Schritt des Verarbeitens der Messwerte des Sensors (2), wobei ein digitaler Strom, der von der Kommunikationseinrichtung (6) der Verbindungsvorrichtung (1) gesendet werden soll, hergestellt wird; und
- Eliminieren des in der temporären Speichereinrichtung (8) gespeicherten digitalen Stroms nach dem Schritt des Empfangens des Deaktivierungssignals durch die Aktivierungs- und Deaktivierungseinrichtung (7).

## Revendications

1. Dispositif d'interconnexion (1) d'au moins un capteur (2) et d'un dispositif électronique portable (3), le capteur (2) étant configuré pour émettre un signal analogique et/ou numérique sur la base d'une mesure et pour être activé et/ou désactivé à distance, et le dispositif électronique portable (3) étant configuré pour recevoir et transmettre un flux numérique envoyé par le dispositif d'interconnexion (1) et pour émettre un signal d'activation et/ou de désactivation avec un code d'identification qui l'identifie individuellement, le dispositif d'interconnexion (1) comprend :
- Des moyens de réception (4) configurés pour recevoir les signaux analogiques et/ou numériques provenant du capteur (2) ;
- Des moyens de traitement (5) configurés pour décoder le signal provenant du capteur, le traiter et le coder en un flux numérique comprenant au moins :
- un code d'identification du dispositif d'interconnexion (1) ;
- un code d'état comprenant la valeur de la mesure d'au moins un capteur (2) ;
- des moyens de communication (6) configurés pour transmettre le flux numérique au dispositif électronique portable (3) ;
- des moyens d'activation et de désactivation (7) configurés pour recevoir le signal d'activation et/ou de désactivation avec un code d'identification du dispositif portable (3) provenant du dispositif électronique portable (3) et pour activer et/ou désactiver le capteur (2), les moyens de réception (4), les moyens de traitement (5) et les moyens de communication (6) ; et
- des moyens de stockage temporaire (8) configurés pour stocker temporairement le code d'identification du dispositif pour l'interconnexion (1) et le code d'état et dans lequel les moyens d'activation et de désactivation (7) sont en outre configurés pour activer et/ou désactiver les moyens de stockage temporaire (8).

2. Dispositif d'interconnexion (1) selon la revendication précédente, dans lequel les moyens d'activation et de désactivation (7) sont configurés pour détecter le code d'identification du dispositif électronique portable (3) et dans lequel le flux numérique comprend en outre ledit code d'identification.

3. Dispositif d'interconnexion (1) selon l'une quelconque des revendications précédentes, dans lequel les moyens de communication (6) sont configurés pour transmettre le flux numérique sans fil au moyen d'un signal de transmission à large diffusion, et dans lequel les moyens d'activation et/ou de désactivation (7) sont configurés pour recevoir un signal de transmission à large diffusion, suivant le protocole Bluetooth.

4. Système de transmission d'informations, comprenant au moins :
- un capteur (2) configuré pour émettre un signal analogique et/ou numérique sur la base d'une mesure et pour être activé à distance ;
- un dispositif d'interconnexion (1) d'au moins un capteur et d'un dispositif électronique portable (3) selon les revendications 1 à 3 ;
- un dispositif électronique portable (3) configuré pour recevoir le flux numérique envoyé par le dispositif d'interconnexion (1) et pour le transmettre à un dispositif de stockage à distance (9), ainsi que pour émettre un signal d'activation et/ou de désactivation avec un code d'identification qui l'identifie individuellement et qui est configuré pour activer et/ou désactiver les moyens de réception (4), les moyens de traitement (5) et les moyens de communication (6) du dispositif d'interconnexion (1), et/ou pour désactiver les moyens de stockage temporaire (8) ; et
- un dispositif de stockage à distance (9) configuré pour recevoir le flux numérique et le stocker.

5. Système de transmission d'informations selon la revendication 4, dans lequel le signal émis par les moyens de communication (6) est un signal de transmission à large diffusion, suivant le protocole Bluetooth ou similaire, et l'appareil électronique portable (3) est un smartphone ou une tablette.

6. Procédé de transmission d'informations dans le système de la revendication 4 comprenant au moins un capteur (2) et au moins un dispositif de stockage à distance (9), dans lequel le système comprend un dispositif d'interconnexion (1) selon l'une quelconque des revendications 1 à 3 et un dispositif électronique portable (3) où le capteur (2) est configuré pour émettre un signal analogique et/ou numérique sur la base d'une mesure et pour être activé et/ou désactivé à distance, le dispositif électronique portable (3) est configuré pour recevoir et transmettre un flux numérique et pour émettre un signal d'activation et/ou de désactivation avec un code d'identification du dispositif portable (3), et le dispositif de stockage à distance (9) est configuré pour recevoir le flux numérique et le stocker, le procédé comprend les étapes de :
- Envoi du signal d'activation par le dispositif électronique portable (3) au dispositif d'interconnexion (1) ;
- Réception du signal d'activation par les moyens d'activation et de désactivation (7) du dispositif d'interconnexion (1) ;
- Activation par les moyens d'activation et de désactivation (7) du dispositif d'interconnexion (1) du capteur (2) et des moyens de réception (4), des moyens de traitement (5), des moyens de communication (6) et des moyens de stockage temporaire (8) du dispositif d'interconnexion (1) et obtention des valeurs de mesure du capteur (2) ;
- Envoi par le capteur (2) du signal analogique et/ou numérique en fonction des valeurs de mesure au dispositif d'interconnexion (1) ;
- Réception des valeurs de mesure par les moyens de réception (4) du dispositif d'interconnexion (1) ;
- Traitement des valeurs de mesure du capteur (2) dans lequel un flux numérique à envoyer par les moyens de communication (6) du dispositif d'interconnexion (1) est établi, qui comprend les sous-étapes suivantes :
- Attribution au flux numérique d'un code d'identification du dispositif d'interconnexion ;
- Attribution au flux numérique d'un code d'état comprenant la valeur de la mesure d'au moins un capteur ;
- Transmission du flux numérique au dispositif électronique portable (3) ;
- Envoi du flux numérique du dispositif électronique portable (3) au dispositif de stockage à distance (9) ;
- Réception et stockage du flux numérique respectivement par et dans le dispositif de stockage à distance (9) ;
- Envoi du signal de désactivation par le dispositif électronique portable (3) au dispositif d'interconnexion (1) ;
- Réception du signal de désactivation par les moyens d'activation et de désactivation (7) du dispositif d'interconnexion (1) ; et
- Désactivation du capteur (2), des moyens de réception (4), des moyens de traitement (5), des moyens de communication (6) et des moyens de stockage temporaire (8) du dispositif d'interconnexion (1).

7. Procédé de la revendication précédente,
dans lequel le procédé comprend en outre les étapes de :
- Envoi du signal d'activation avec le code d'identification par le dispositif électronique portable (3) ;
- Détection du code d'identification par les moyens d'activation et de désactivation (7), après l'étape de réception du signal d'activation par les moyens d'activation et de désactivation (7) ;
- Attribution du code d'identification du dispositif électronique portable (3), après la sous-étape d'attribution du code d'état à l'étape de traitement des valeurs de mesure du capteur (2) dans laquelle un flux numérique à envoyer par les moyens de communication (6) du dispositif d'interconnexion (1) est établi ; et
- Envoi du signal de désactivation avec le code d'identification par le dispositif électronique portable (3), après l'étape de réception et de stockage du flux numérique par et dans le dispositif de stockage à distance (9).

8. Procédé selon la revendication 7, dans lequel le procédé comprend en outre les étapes de :
- Stockage du flux numérique dans les moyens de stockage temporaire (8) du dispositif d'interconnexion (1), après l'étape de traitement des valeurs de mesure du capteur (2) dans laquelle un flux numérique à envoyer par les moyens de communication (6) du dispositif d'interconnexion (1) est établi ; et
- Élimination du flux numérique stocké dans les moyens de stockage temporaire (8), après l'étape de réception du signal de désactivation par les moyens d'activation et de désactivation (7).
